# EUROPÄISCHE PATENTSCHRIFT

(11) **EP 0 543 145 B1**
(45) Veröffentlichungstag und Bekanntmachung des Hinweises auf die Patenterteilung: **29.05.1996**
(21) Anmeldenummer: 92117594.9
(22) Anmeldetag: 15.10.1992
(51) Int. Cl.: A01F 15/07, A01F 15/08

(54) **Rundballenwickelgerät**
Round bale wrapper
Dispositif pour emballer des balles rondes

(30) Priorität: 22.11.1991 DE 4138499
(43) Veröffentlichungstag der Anmeldung: 26.05.1993
(73) Patentinhaber: MASCHINENBAU UND LANDTECHNIK GmbH Zwickau, D-08141 Reinsdorf (DE)
(72) Erfinder: Biller, Bernd, W-5600 Wuppertal (DE); Liebich, Dirk, W-5609 Hückeswagen (DE)

(56) Entgegenhaltungen:
- EP-A- 0 110 110
- WO-A-90/13995
- WO-A-90/14756
- GB-A- 2 221 203

## Beschreibung

Die Erfindung betrifft eine Vorrichtung zum Umwickeln eines Rundballens aus Heu, Halbheu oder Stroh mit einer Kunststoffolie, mit einem Rahmen und mit einem am Rahmen angebrachten Wickeltisch zur Aufnahme eines zu umwickelnden Rundballens, wobei der Wickeltisch Mittel zur Bewegung des Rundballens um eine horizontale Rotationsachse aufweist und wobei der Wickeltisch zum Abladen des umwickelten Rundballens aus der Wickelposition in eine Schrägposition verschwenkbar ist, mit einem Ballenladebügel, der um eine zur Rotationsachse parallele Schwenkachse aus einer ersten abgesenkten Position zur Aufnahme des zu umwickelnden Rundballens in eine zweite angehobene Position, in der sich der Rundballen auf dem Wickeltisch in Wickelposition befindet, verschwenkbar ist, und mit Mitteln zur Führung der Kunststoffolie um den auf dem Wickeltisch befindlichen Rundballen herum, welche eine Wickelmaterialhaltevorrichtung umfaßt, die um eine die Rotationsachse des auf dem Wickeltisch rotierend angetriebenen Rundballens kreuzende Achse rotierend antreibbar ist.

Eine solche Ausbildung ist aus der WO-A-90/14756 bekannt. Das Rundballenwickelgerät ist an die Ausstoßöffnung der Rundballenpresse angeschlossen. Der Wickeltisch ist nur zum Abladen des mit der Kunststoffolie umwickelten Rundballens nach hinten abkippbar. Für die Beladung des Wickeltisches mit dem aus der Presse ausgestoßenen Rundballens zu dessen Umwicklung dient der Ladebügel. Dieser greift in die Stirnflächen des Rundballens ein und hebt diesen auf den Wickeltisch. Dabei muß der Schwenkweg so gewählt werden, daß der Ballen an der Kante des Wickeltisches vorbeibewegt wird. Gleichzeitig ist der Abstand zur Haube der Rundballenpresse so zu wählen, daß diese ausgehend vom geöffneten Zustand nach dem Ausstoßen des Rundballens wieder geschlossen werden kann. Es ergibt sich somit eine relativ große Anhängelänge für das Rundballenwickelgerät. Der Abstand zwischen der Presse und der dieser zugewandeten Kante des Wickeltisches ist entsprechend groß zu wählen. Desweiteren ist von Nachteil, daß der Rundballen freischwebend über die Tischkante zu heben ist, um Beschädigungen des gepreßten Rundballens zu verhindern.

Beim Abladen fällt der umwickelte Rundballen auf seine Zylinderfläche. Durch die hier nur etwa 5-fach aufeinanderliegenden Lagen der Einwickelfolie kann diese leicht durch Einstechen von Fremdkörpern beschädigt werden, so daß die Dichtheit der Einwickelung nicht mehr gegeben ist.

Da das Wickelgerät in Fahrtrichtung starr mit der Rundballenpresse verbunden ist und eine starre Fahrachse aufweist, werden die Laufräder des Wickelgerätes bei Kurvenfahrten des Gerätezuges seitlich stark verschoben, was für die Feld- und Straßenfahrten nicht tragbar ist. Ferner ist es nachteilig, daß es sich um ein Spezialgerät handelt, das nicht zur Aufnahme der auf dem Feld abgelegten Rundballen und zum stationären Betrieb geeignet bzw. hierzu ausbaufähig ist, so daß solche Geräte keinen Eingang in die Praxis finden konnten.

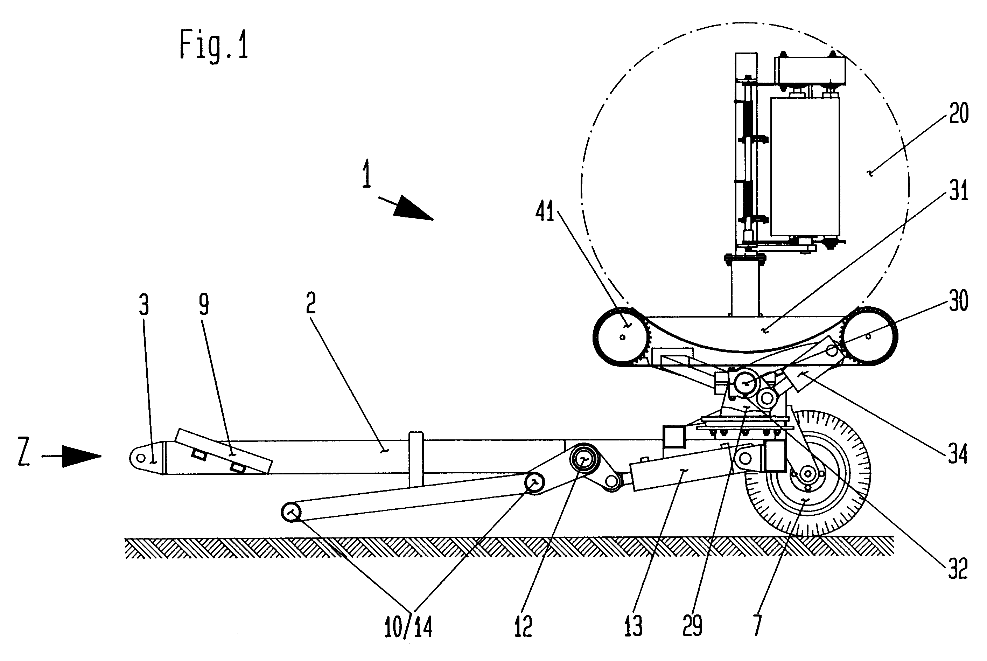

Gemäß einem weiteren, bekannten Vorschlag (EP-A-0110110), wird ebenfalls eine nur zur Ankupplung an eine Rundballenpresse geeignete Wickelmaschine beschrieben, und zwar in zwei Ausführungen. Bei der Ausführung gemäß den Figuren 1 bis 9 weist ein Wickeltisch eine größere Höhe vom Erdboden auf. Um den hinteren Pressraumteil hochklappen zu können soll die Wickelmaschine um einen Betrag rückverlagert werden. Um den aus der Presse im wesentlichen tieferen Niveau austretenden Rundballen in den Wickeltisch einzulegen, soll er durch eine Rollbahn angehoben und auch nach hinten tranportiert werden. Ohne daß offenbart ist, wie letzteres gelöst werden soll, ergibt sich, daß diese Ausgestaltung unpraktikabel, kompliziert und zu aufwendig ist.

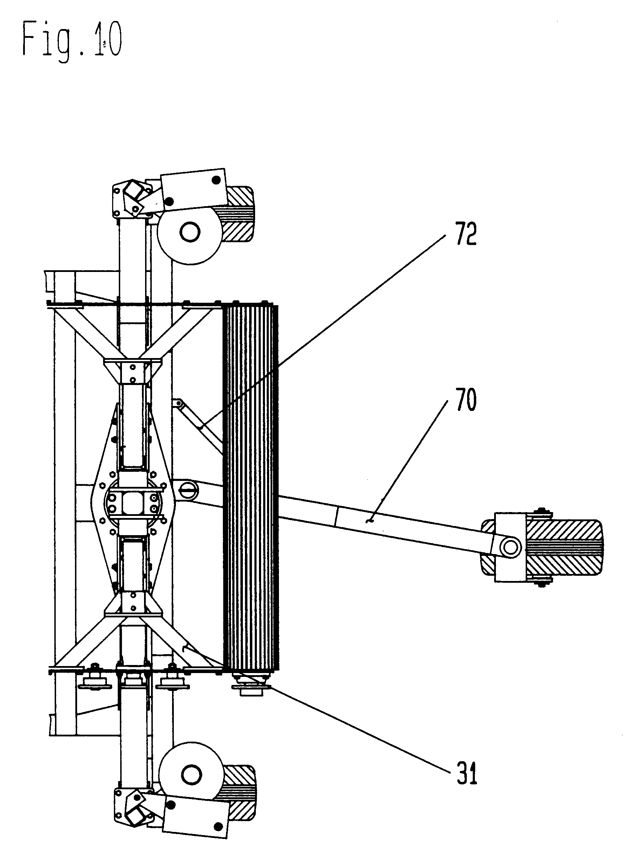

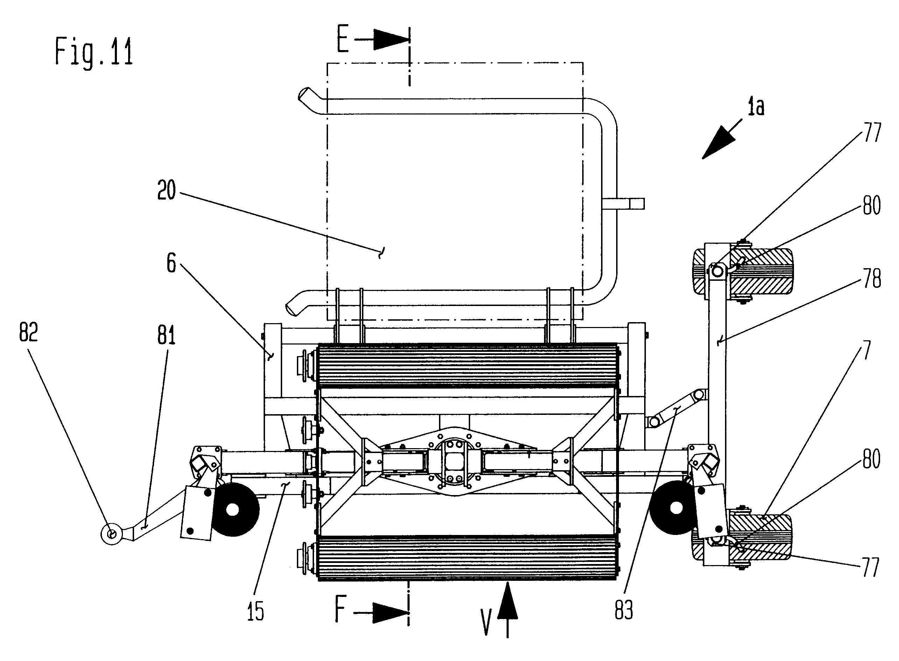

Wird die Ausführung nach den Figuren 10 und 11 betrachtet, so soll der aus der Presse kommende Rundballen selbsttätig durch eine leicht schräg liegende Bahn und den verschwenkten Wickeltisch in letzterem einlaufen, was aber erfahrungsgemäß hiermit nicht sicher zu erreichen ist. Die Ballenerzeugung erfolgt auf unebenem Gelände, so daß die leichte Schräglage der Bahn oft teilweise oder ganz aufgehoben ist und auch seitliche Erschwernisse beim Nachhintenrollen des Rundballens vorliegen, die ein Einlaufen desselben in den Wickeltisch behindern können. Es mangelt somit nach diesem Vorschlag an einer Zwangseinführung des Rundballens in den Wickeltisch, um die Betriebssicherheit zu gewährleisten. Zudem wird durch die Anordnung der Wickelfolieneinrichtung oberhalb des Rundballens die Gesamtschwerpunktlage des Gerätes für die Fahrsicherheit in hängigem Gelände bedenklich erhöht. Die vorgeschlagene Achsschenkellenkung für die Laufräder wäre durch ein umfangreiches Steuer- und Lenksystem, das seine Impulse von der Schrägstellung Schlepper Presse erhält, zu betätigen, was ebenfalls sehr aufwendig, störanfällig und stets anpassungsbedürftig an die jeweils verwendeten Vorlaufmaschinen ist.

Ferner ist es bekannt, fertiggepreßte Rundballen auf Feldern abzulegen, diese durch Aufladeeinrichtungen auf fahrbare Wickeleinrichtungen zu legen und sie dann mit einer Folie luftdicht einzuwickeln.

Beispielsweise ist aus der EP-A-0,391,884 eine Vorrichtung zum Umwickeln eines Rundballens bekannt, welche zum Anhängen an die Dreipunktaufhängung eines Schleppers vorgesehen ist. Die Vorrichtung weist einen Ballenladebügel und einen verschwenkbaren Wickeltisch auf, welche nach hinten, in entgegengesetzter Richtung zur Anordnung des Schleppers verschwenkt werden können. Die Vorrichtung dient zur Aufnahme von bereits fertigepreßten Rundballen vom Erdboden durch den Ballenladebügel, wobei nach der Aufnahme und Lagerung des Rundballens auf dem Wickeltisch der Wickelvorgang eingeleitet wird und nach Abschluß des Wickelvorganges ein Abwerfen in der Aufnahmerichtung erfolgt. Die Vorrichtung ist nur im Zusammenhang mit einem Schlepper direkt einsetzbar, weil eine Standsicherheit nur nach dem Anhängen am Schlepper gewährleistet ist. Ferner wird die Standsicherheit durch eine oberhalb des Wickeltisches an einem Tragarm aufgehängte Wickelmaterialhaltevorrichtung beeinträchtigt. Ein kontinuierliches Arbeiten im Zusammenhang mit einer Ballenpresse ist nicht möglich, weil die Aufnahme und der Abwurf der gewickelten Rundballen zur selben Seite hin erfolgt.

Nachteilig ist hierbei ferner, daß die verstreut und unregelmäßig auf den Feldern abgelegten Rundballen zum Teil in einem gesonderten, aufwendigen Arbeitsgang, z.B. vom Frontlader eines Schleppers aufgenommen und einer Wickelmaschine zugeführt werden müssen. Außerdem sind die im Freien uneingepackt liegenden Rundballen oft ungünstigen, die Qualität ihres Inhalts beeinträchtigenden Witterungseinflüssen ausgesetzt, z.B. bei Gewitter, da sie in vielen Fällen in Hochsaisonzeiten meist nicht kurz nach ihrer Herstellung aus arbeitstechnischen Gründen bereits eingewickelt werden können.

Auch wurde zur Beschleunigung dieser Arbeitsverfahren und zur Vereinfachung der Grätekombination bereits der Vorschlag gemacht, Rundballen-Wickelgeräte an die Pressen über eine Karrendeichselanhängung anzukuppeln, um auch die ausgestoßenen Rundballen direkt einzuwickeln. Als ungünstig hat sich gezeigt, daß bei Kurvenfahrten der Übergabebereich von der Presse zur Wickelmaschine auf einer Seite auseinanderklafft bzw. anderseitig stark verengt wird, so daß dann ein ungestörtes Eintreten des Rundballens in die Wickelmaschine nicht erfolgen kann. Es muß hierbei auf die Übergabe des Rundballens während des Kurvenfahrens verzichtet werden. Dies erfordert eine besondere Beobachtung des Betriebsablaufs durch den Schlepperfahrer und gegebenenfalls, wenn in einer Kurve ein Rundballen ausgestoßen werden muß, eine Unterbrechung der kontinuierlichen Arbeitsweise. Es muß dann ein Herausfahren aus der Aufnahmebahn zum Ablegen des Rundballens in Geradeausfahrt sowie ein Wiedereinfahren in dieselben erfolgen.

Allen diesen bekannten Einrichtungen haftet noch der Nachteil an, daß sie Einzweckmaschinen sind, da sich nicht wahlweise sowohl hinter der Presse und einem Schlepper zum Aufnehmen und Einwickeln der Rundballen angehangen als auch nicht ohne Schlepper als stationäres Gerät zum Einsatz kommen können, was aber oft wünschenswert ist. Zudem weisen einige der bekannten Einrichtungen eine lange Bauweise auf, wodurch das Manövrieren erschwert und bei unebenem Gelände Schwierigkeiten durch Aufsetzen auf Erdhügel und dgl. verursacht werden.

Der Erfindung liegt die Aufgabe zugrunde, eine Vorrichtung zum Umwickeln von gepreßten Rundballen zu schaffen, bei der ein kontinuierliches Arbeiten möglich ist und bei der eine möglichst raumsparende, d.h. insbesondere kurzbauende Einheit geschaffen wird, die einen Einsatz in unebenem und hängigen Gelände erleichtert und bei der das Überführen der Rundballen auf den Wickeltisch erleichtert wird und Beschädigungen bei der Überführung vermieden werden.

Die Aufgabe wird erfindungsgemäß dadurch gelöst, daß die Wickelmaterialhaltevorrichung mit einer Lagerung am Rahmen um die die Rotationsachse des Wickeltisches kreuzende Achse unterhalb des Wickeltisches drehend antreibbar festgelegt ist, daß der Wickeltisch aus der Wickelposition zusätzlich zu der Schrägposition zum Abladen des umwickelten Rundballens in eine dazu entgegengerichtete Schrägposition zum Ballenladebügel hin verschwenkbar ist, daß zur Überführung des zu umwickelnden Rundballens in die Wickelposition der Ballenladebügel von seiner abgesenkten ersten Position und der Wickeltisch aus seiner zum Ballenladebügel hin geneigten Schrägposition gemeinsam bis zur Wickelposition des Wickeltisches verschwenkbar sind und daß der Wickeltisch in der Wickelposition festsetzbar ist.

Von Vorteil bei dieser Ausbildung ist, daß durch das Abkippen des Wickeltisches zu dem Ladebügel hin das Beladen erleichtert wird. Gleichzeitig kann dadurch eine kurzbauende Einheit geschaffen werden, weil auch durch das Abkippen eine größere Annäherung des Rundballens an den Wickeltisch ermöglicht wird. Insgesamt wird die Überführung auf den Wickeltisch und zur Wickelposition hin erleichtert. Beschädigungen können an dem gepreßten Rundballen nicht eintreten, weil dieser stets bei der Überführung des Wickeltisches in die Wickelposition in Kontakt zu diesem verbleibt. Auf diese Weise werden auch schädliche Einflüsse auf den gepreßten Rundballen vermieden.

In weiterer Ausgestaltung der Erfindung ist vorgesehen, daß der Rahmen eine in ihrem Mittelbereich abgesenkte und nach außen zu den Rädern hin hochgezogene Fahrzeugachse aufweist, daß der Wickeltisch und die Wickelmaterialhaltevorrichtung auf dem abgesenkten Mittelbereich der Fahrzeugachse angebracht sind.

Von Vorteil bei einer solchen Ausbildung ist, daß eine niedrige Bauweise erzielt wird, mit entsprechend niedrigem Schwerpunkt. Durch die Verlagerung der Überleitvorrichtung nach unten wird des weiteren eine noch kürzere Bauweise im Zusammenhang mit einem Einsatz der Rundballenwickelvorrichtung mit einer Rundballenpresse erreichbar.

Eine besonders kompakte Bauweise wird dadurch erreicht, daß die Wickelmaterialhaltevorrichtung über eine flach ausgeführte Lagerung auf dem Mittelbereich der Fahrzeugachse angeordnet ist und daß die die Folienrollen haltenden und rotierend antreibbaren Teile der Wickelmaterialhaltevorrichtung an den Verlauf der Fahrzeugachse angepaßt sind.

In Ausgestaltung der Erfindung ist vorgeschlagen, daß zur Lagerung der Wickelmaterialhaltevorrichtung auf der Mitte des Mittelbereiches der Fahrzeugachse ein axial kurzer Lagerring fest angeordnet ist, dessen oberer Bereich ein mit dem Innenring verbundenes Drehverbindungswälzlager aufnimmt, der anderseitig durch einen Lagerbock axial gehalten ist und an dessen Außenring oberseitig die Wickelmaterialhaltevorrichtung und unterseitig ein Kettenrad angeschlossen ist.

Ferner ist vorgesehen, daß ein Lagerbock zur Lagerung des Wickeltisches vorgesehen ist, in dem eine den Wickeltisch tragende Welle horizontal und unmittelbar über der Wickelmaterialhaltevorrichtung gelagert ist und daß ein Klemmstück, an dem ein Hydrobeweger angreift, auf der Welle drehfest angeordnet ist.

Für eine Vorrichtung zum Umwickeln von Rundballen, welche an eine Rundballenpresse anhängbar und mit Mitteln zur direkten Übernahme einer aus der Ausstoßöffnung der Rundballenpresse ausgestoßenen, noch zu umwickelnden Rundballen versehen ist und welche eine Leitvorrichtung zur Überleitung des ausgestoßenen Rundballens auf den Ballenladebügel aufweist, ist in Ausgestaltung der Erfindung vorgesehen, daß an dem Fahrzeugrahmen ein Anschlußrahmen angebracht ist, der um eine horizontale Achse schwenkbar an die Rundballenpresse angeschlossen ist, daß die Räder des Fahrzeugrahmens als um eine vertikal verlaufende Schwenkachse schwenkbare Schwenkräder ausgebildet sind und daß der Anschlußrahmen die Leitvorrichtung zur Überleitung des aus der Rundballenpresse ausgestoßenen Rundballens an den abgesenkten Ballenladebügel aufweist.

Von Vorteil bei einer solchen Ausgestaltung ist, daß ein Einsatz unter allen Betriebsbedingungen, so z. B. in unebenem, hängigem Gelände möglich ist, wobei enge Kurvenfahrten erreicht werden können.

Es wird eine besonderes kurze Bauweise erreicht.

Vorzugsweise ist die Leitvorrichtung als Rollgitter ausgebildet.

Ferner ist vorgesehen, daß der Anschlußrahmen über Schnellverschlüsse mit dem Fahrzeugrahmen verbunden ist.

Um den Einsatz auch als separates Gerät zu erreichen, mit dem auch bereits gepreßte Rundballen, beispielsweise auf dem Boden liegend, aufgenommen werden können, ist in Ausgestaltung bei einer Vorrichtung nach der Erfindung mit einem seitlich des Wickeltisches bezüglich der Fahrtrichtung des Fahrzeugrahmens angeordneten Ballenladebügel zur Aufnahme von am Boden liegender gepreßter Rundballen zu deren Umwicklung mit Kunststoffolie vorgesehen, daß die Räder lösbar mit der Fahrzeugachse verbunden sind, daß die Lagerung eines der Räder des Fahrzeugrahmens zum Anschluß einer quer zur Fahrzeugachse orientierten Zusatzachse dient, daß die Lagerung des anderen der Räder zum Anschluß einer Zusatzdeichsel dient und daß die Räder fest mit der Zusatzachse verbindbar sind.

Die kurze Bauweise führt bei einer Vorrichtung zum Umwickeln von Rundballen, die mit einem seitlich angeordneten Ballenladebügel zur Aufnahme von am Boden aufliegenden bereits gepreßten Rundballen dient, zu einer Verbesserung der Standfestigkeit. Ein Kippen des Rundballenwickelgerätes bei der Aufnahme eines Rundballens tritt nicht ein. Zusatzgewichte erübrigen sich.

Um eine möglichst vollautomatische Arbeitsweise zu erreichen, ist ergänzend vorgeschlagen, daß eine programmierbare Schaltung, insbesondere mit eigener Kraftquelle, wie einem Elektro- oder Verbrennungsmotor, vorgesehen ist, über die eine Steuerung der Bewegungsabläufe für den Wickeltisch, den Ballenladebügel und den Antrieb der Wickelmaterialhaltevorrichtung erfolgt.

Um die Auflagedrücke auf den Wickeltisch kleinzuhalten, ist vorgesehen, daß der Wickeltisch beabstandete Rollen aufweist, um die mindestens zwei Bänder gelegt sind, deren oberer Gurt so durchhängt, daß er sich unter Spannung an den Bundballen anlegt.

Eine besonders standfeste Ausbildung wird erreicht, wenn entsprechend einem ergänzenden Vorschlag vorgesehen ist, daß eine Halterung der Zusatzachse etwa in einem Abstand von 25 % des Achsabstandes der Zusatzachse angeordnet ist, wobei das weiter liegende Schwenkrad, in Fahrtrichtung betrachtet, im inneren Bereich des Abstandes der Arme des Ballenladebügels im auf den Boden abgelassenen Zustand liegt und die Öse der Zusatzdeichsel etwa in Flucht zum nah an der Halterung liegenden Rad liegt.

Um beim Abladen des Rundballens vom Wickeltisch Beschädigungen zu vermeiden und den Rundballen in eine sichere Seitenlage zu überführen, ist ergänzend vorgesehen, daß mittig oder seitlich hinter dem Fahrzeugrahmen eine Abladekippvorrichtung höhenschwenkbar angehangen ist, die ein seitenschwenkbares, mit einer soch schräg liegenden Auftreffläche für den aus dem Rundballenwickelgerät fallenden Rundballen versehendes Leitstück aufweist, daß der Rundballen beim Fall von seiner waagerechten Wickellage zu einer senkrechten Lage umgelenkt wird, wobei das Leitstück den fallenden Rundballen nachschwenkend durch Fremdkraft sicher zur Auflage auf seine Stirnseite abschließend kippt.

Alternativ kann dies auch dadurch erreicht werden, daß mittig oder seitlich hinter dem Fahrzeugrahmen eine Abladekippvorrichtung seitenschwenkbar oder höhenanpaßbar angehangen ist, die vor dem Fall des Rundballens aus dem Rundballenwickelgerät so seitlich verschwenkbar ist, daß letzterer so auf sie auftrifft, daß er zur Senkrechtstellung auf seine Stirnseite gekippt wird und die Abladekippvorrichtung dem fallenden Rundballen folgend ihn zur abgeschlossenen Senkrechtstellung drückt.

In Ausgestaltung dieser beiden Lösungen kann vorgesehen sein, daß an den Abladekippvorrichtungen auf dem Erdreich aufliegende Schutzkufen angeordnet sind, auf deren Schleifstücke die Stirnseitenkanten der Rundballen beim Auftreffen auf den Erdboden gelangen.

Die mit der Erfindung erzielten Vorteile bestehen insbesondere darin, daß die Rundballen unabhängig von den Geländeverhältnissen schonend sowie sicher zwangsmäßig auf den Wickeltisch in kurzem Arbeitstakt gebracht, hier durch die Wickelmaterialhaltevorrichtung mit zwei Folienrollen kurzzeitig eingewickelt werden, um dann schonend auf dem Erdboden abgelegt zu werden.

Verschiedene Ausgestaltungsvarianten der Erfindung sind in der Zeichnung schematisch dargestellt.

Es zeigt
- Fig. 1: eine Schnittdarstellung in seitlicher Betrachtung des Erfindungsgegenstandes bei Ausrüstung zum Anhängen und zur Übernahme der Rundballen an bzw. aus einer Presse gemäß der Linie A B nach Fig. 2 ohne hintere Abladekippvorrichtung,
- Fig. 2: eine Draufsicht zur Fig. 1 mit einer Abladekippvorrichtung,
- Fig. 3: ein Schnitt gemäß Linie C D nach Fig. 2 ohne hintere Abladekippvorrichtung,
- Figur 4: eine Einzelheit Y nach Figur 3
- Figur 5: die Gerätekombination in Längsschnittdarstellung bei der Ballenübernahme von der Presse zum Wickeltisch des Rundballenwickelgerätes,
- Figur 6: den Erfindungsgegenstand wie Figur 5 als Teilschnitt mit einem Rundballen in Wickelposition befindlich,
- Figur 7: wie Figur 6, wobei sich der Wickeltisch in Rundballenabgabeposition befindet, mit einer angehangenen Abladekippvorrichtung entsprechend Figur 2
- Figur 8: die Abladekippvorrichtung nach Pfeilrichtung X gemäß Figur 7 mit einer Schemadarstellung des Rundballenabladeund Kippvorganges,
- Figur 9: wie Figur 7, jedoch mit einer Variante zur Rundballenabladekippvorrichtung nach den Figuren 2 und 7,
- Figur 10: eine Draufsicht zur Figur 9,
- Figur 11: eine Draufsicht auf den Erfindungsgegenstand bei Anhängung zur seitlichen Aufnahme der Rundballen vom Boden, ohne Abladekippvorrichtung,
- Figur 12: eine Schnittdarstellung gemäß Linie E-F in Pfeilrichtung W nach Figur 11 und
- Figur 13: eine Ansicht in Pfeilrichtung V nach Figur 11.

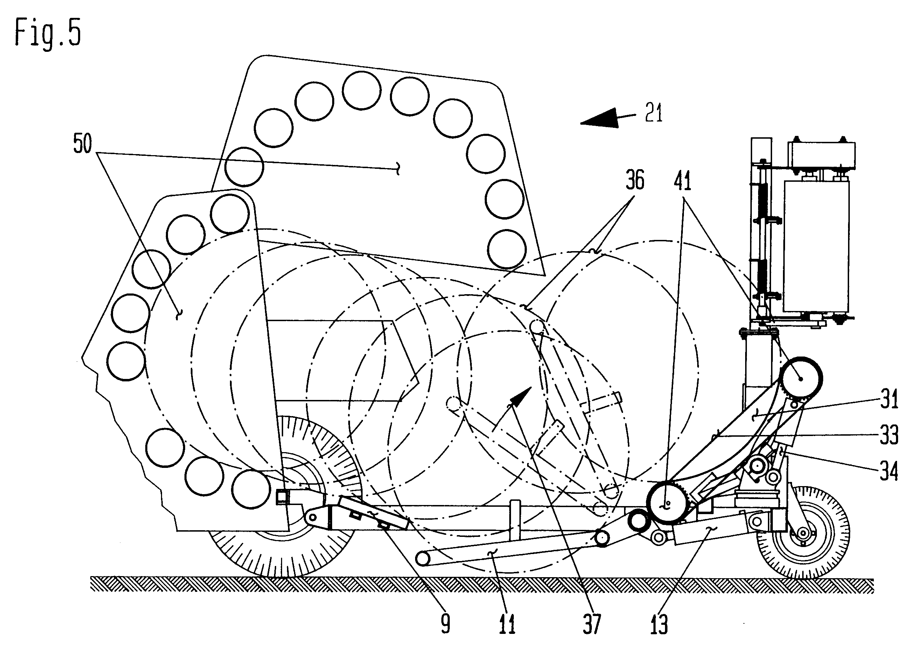

Ein Rundballenwickelgerät 1 ist gemäß seiner Ausstattung nach den Figuren 1 bis 3 ausgerüstet zum Anbau an eine in Figur 5 dargestellte Presse 21. Es wird über einen Anschlußrahmen 2 mittels zweier Gabelstücke 3 mit entsprechenden Gegenlagerstücken der Presse 21 durch in sie eingesetzte Bolzen 5 angeschlossen. Über die so gebildete horizontale Achse 4 wird eine Schwenkbarkeit ermöglicht. In Fahrtrichtung liegt jedoch eine starre Anlenkung vor.

Vorzugsweise entsprechen die Anschlußmaße der Gabelstücke 3 denen der genormten Dreipunktanbauvorrichtung eines Schleppers, so daß stets auch ein Anbau an einen Schlepper möglich ist. Infolge dieser Anhängung sind für störungsfreie Kurvenfahrten an einem Fahrzeugrahmen 6 außen liegend Schwenkräder 7 um eine Schwenkachse 8 angeordnet. Diese stellen sich bei Kurvenfahrten selbsttätig in die erforderliche Winkellage ein.

Im Anschluß an die Achse 4 ist ein Rollgitter 9 zwischen den äußeren Rahmenteilen des Anschlußrahmens 2 vorgesehen. Auf diesem gelangen die von einer Presse 21 ausgestoßenen Rundballen 20 rollend nach hinten auf Arme 10 eines Ballenladebügels 11. Dieser ist um eine Schwenkachse 12 schwenkbar am Fahrzeugrahmen 6 angeordnet. Er ist in einer tiefen Position 14 dargestellt und durch einen Hydrobeweger 13 in der Darstellung nach Figur 1 im Uhrzeigersinn in unterschiedliche Positionen hochschwenkend festsetzbar. Dies wird später noch näher beschrieben.

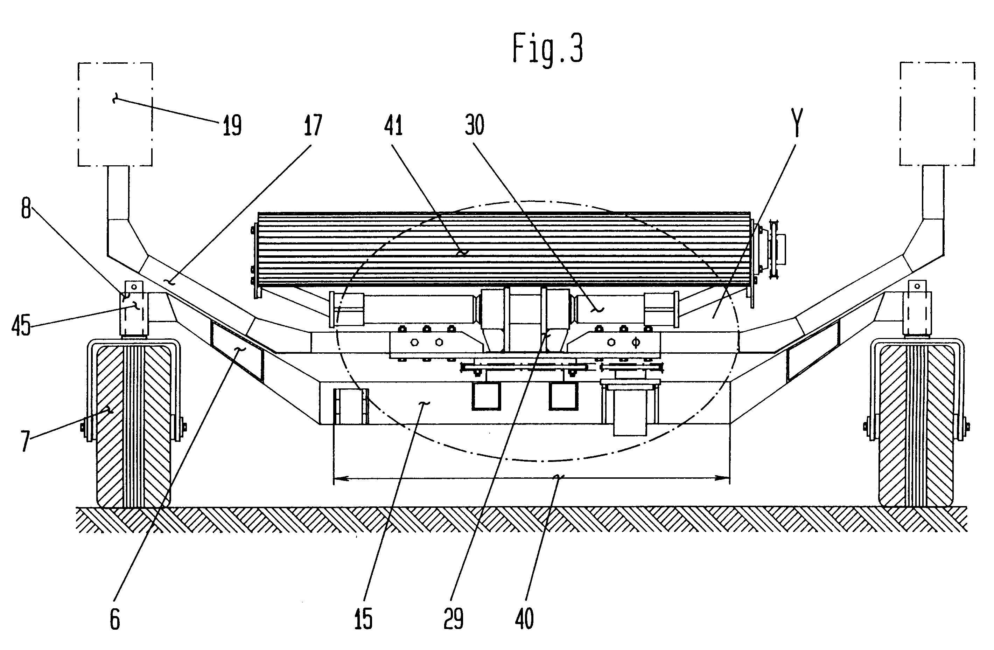

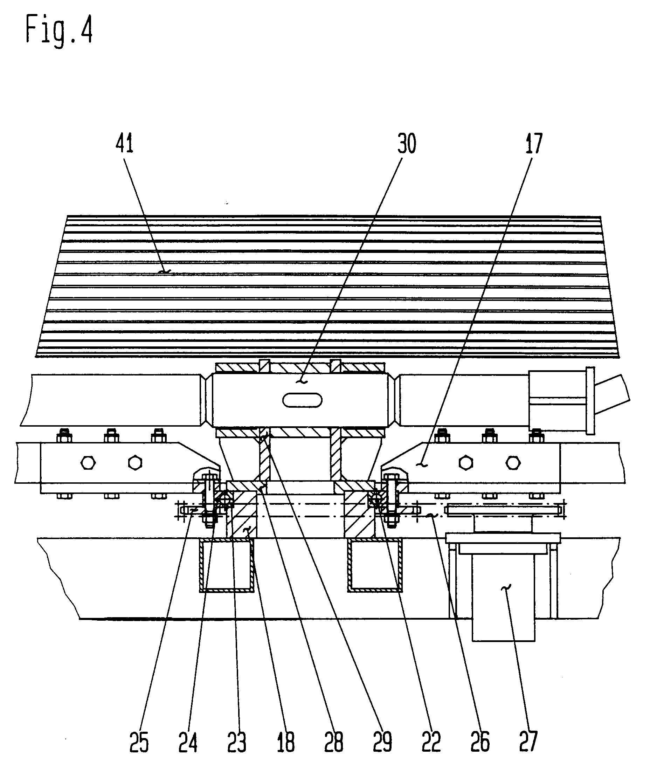

Wie die Figuren 3 und 4 deutlich zeigen, ist an einer starren Fahrzeugachse 15 des Fahrzeugrahmens 6 mittig senkrecht stehend ein Lagerring 18 festsitzend angeordnet. Oben auf dem Lagerring 18 sitzt mit einem Flansch 28 ein Lagerbock 29 der ein Drehverbindungswälzlager 22 festsetzt. Dessen Innenring 23 wird über den Flansch 28 auf dem Lagerring 18 festgesetzt. Über den Außenring 24 des Drehverbindungswälzlagers 22 ist an seiner Oberseite eine Wickelmaterialhaltevorrichtung 17 drehbar angeschlossen. Ferner ist an der Unterseite des Außenrings 24 ein Kettenrand 25 befestigt, mit dem die Wickelmaterialhaltevorrichtung 17 über eine Kette 26 durch ein Hydraulikmotor- Getriebeaggregat 27 bedarfsweise in entsprechende Drehung zum Einwickeln der Rundballen 20 versetzt wird.

Oben an den Lagering 18 ist über den Flansch 28 ein Lagerbock 29 angeschlossen. In diesem ist waagerecht eine Welle 30 eines Wickeltisches 31 gelagert. Der Wickeltisch 31 ist mittels eines an einem mit der Welle 30 fest verbundenen Klemmstückes 32 angreifenden Hydrobeweger 34, der anderseitig an den Lagerbock 29 anschließt, in unterschiedliche Arbeitspositionen verschwenkend festsetzbar.

Zur Erzielung einer tiefen Schwerpunktlage des gesamten Gerätes ist, wie es Figur 3 deutlich zeigt, die Fahrzeugachse 15 in ihrem Mittelbereich 40, soweit es die erforderliche Bodenfreiheit zuläßt, tiefliegend ausgeführt. Sie ist dann nach außen beidseitig hochgezogen, damit ein ausreichender Freiraum für die dort an ihr mittels der Schwenkachse 8 angeordneten Schwenkräder 7 vorliegt. Die in flacher Bauhöhe gestaltete Wickelmaterialhaltevorrichtung 17 ist der Form der Fahrzeugachse 15 mit geringem Abstand angepaßt. Hierdurch ist auch der darüberliegende Wickeltisch 31 tiefliegend angeordnet. Durch diese Gestaltungen ergibt sich eine tiefe Gesamtschwerpunktlage, die für Arbeiten am Hang und dergleichen die Kippsicherheit erhöht.

Die Wickelmaterialhaltevorrichtung 17 ist doppelseitig ausgeführt, und jeweils außen sind bekannte Folienrollen 19 mit ihrem erforderlichen Zubehör angeschlossen. Es kann auch die Wickelmaterialhaltevorrichtung 17 nur einseitig für eine Folienrolle 19 vorgesehen sein, wenn zur Vereinfachung auf die durch zwei Folienrollen 19 erreichte kurze Einwickelzeit für einen Rundballen 20 verzichtet wird.

Der Wickeltisch 31 besteht im wesentlichen aus einem an der Welle 30 angeschlossenen Schwenkrahmen 35, der zwei antreibbare Rollen 41 zur Auflage des Rundballens 20 aufweist.

Wie Figur 5 verdeutlicht, gelangt nach Öffnen des Preßraumes 50 der Presse 21 der Rundballen 20 rollend gemäß den strichpunktiert gezeichneten Positionen 36 über das Rollgitter 9 auf den mittels des Hydrobewegers 13 abgesenkten Ballenladenbügel 11. Zwischenzeitlich wurde der Wickeltisch 31 mittels des Hydrobewegers 34 in die dargestellte Schrägposition 33 nach vorn und hier festsitzend verschwenkt. Der Rundballen 20 gelangt durch anschließendes Hochschwenken des Ballenladebügels 11 in Pfeilrichtung 37 zur Anlage gegen die Rollen 41.

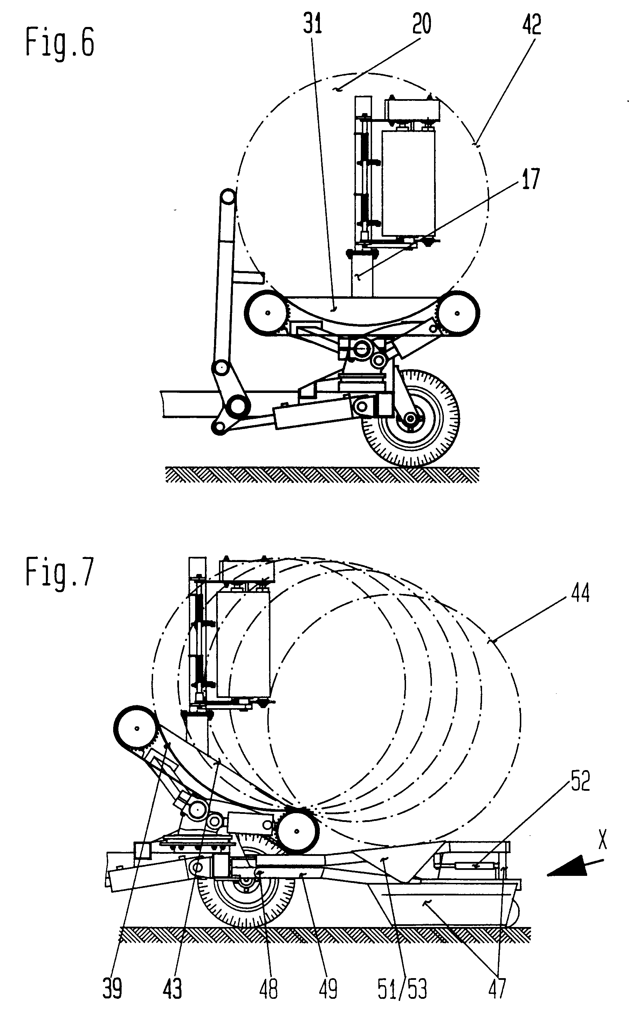

Durch Rückschwenken des Wickeltisches 31 zur Waagerechten und gleichzeitiges, weiteres Mitschwenken des Ballenladebügels 11 wird der Rundballen 20 sicher in die waagerechte Wickelposition 42 gebracht, wie es die Figur 6 zeigt. Nach Rückschwenkung des Ballenladebügels in die tiefe Arbeitsposition 14 kann das bekannte Umwickeln des Rundballens 20 beginnen. Hierzu wird durch Antreiben der Rollen 41 der Rundballen 20 in die erforderliche Drehung versetzt. Gleichzeitig wird die Wickelmaterialhaltevorrichtung 17 um das Drehverbindungs-Wälzlager 22 ebenfalls in Drehung versetzt, wobei die angesetzte Folie den Rundballen 20 einwickelt.

Zur Minderung der Auflagedrücke des Rundballens 20 auf die beiden Rollen 41 können im Kreisbogen entsprechend dem Radius der Rundballen 20 weitere auch angetriebene Rollen 41 vorgesehen werden.

Zur Einsparung an Bauhöhe, um den Aufwand, insbesondere im Mittelbereich, klein zu halten sowie die Auflagedrücke des Rundballens 20 auf die Rollen durch Verteilen niedrig zu halten, sind um die Rollen 41 zwei oder mehrere Bänder 39 verteilt auf die Länge der Rollen 41 gelegt. Deren oberer Trumm 46 hängt so durch, daß er sich etwas unter Spannung an den Rundballen 20 anlegt.

Nach abgeschlossenem Einwickeln des Rundballens 20 wird durch Verschwenken des Wickeltisches 31 in eine Schrägposition 43 gemäß der Figur 7 der Rundballen 20 zum Abrollen auf das Erdreich veranlaßt. Dies erfolgt gemäß den strichpunktiert gezeichneten Positionen 44.

Würde der Rundballen 20 in seiner waagerechten Lage auf den Erdoden fallen, wo wäre die Folieneinwicklung sehr gefährdet, da sie von spitzen Gegenständen auf dem Erdreich, wie Stoppeln, Steine oder dergleichen durchstoßen werden könnte. An allen Umfangsstellen sind nur etwa 5 Lagen des dünnen Wickelmaterials vorhanden. Dazu liegen im Gegensatz an der Stirnseite des Rundballens 20, etwa 24 Wickellagen übereinander. Außerdem könnte der herunterrollende Rundballen 20 unkontrolliert weiterrollen. Dies gilt besonders, wenn im Hanggelände gearbeitet wird. Dabei würden weitere Schäden an der Einwickelung eintreten. Der Rundballen 20 könnte je nach Hanggeländeverhältnissen, z.B. Böschungen herabrollen, auf Straßen oder fremdes Gelände gelangen und hier hohe Schäden verursachen.

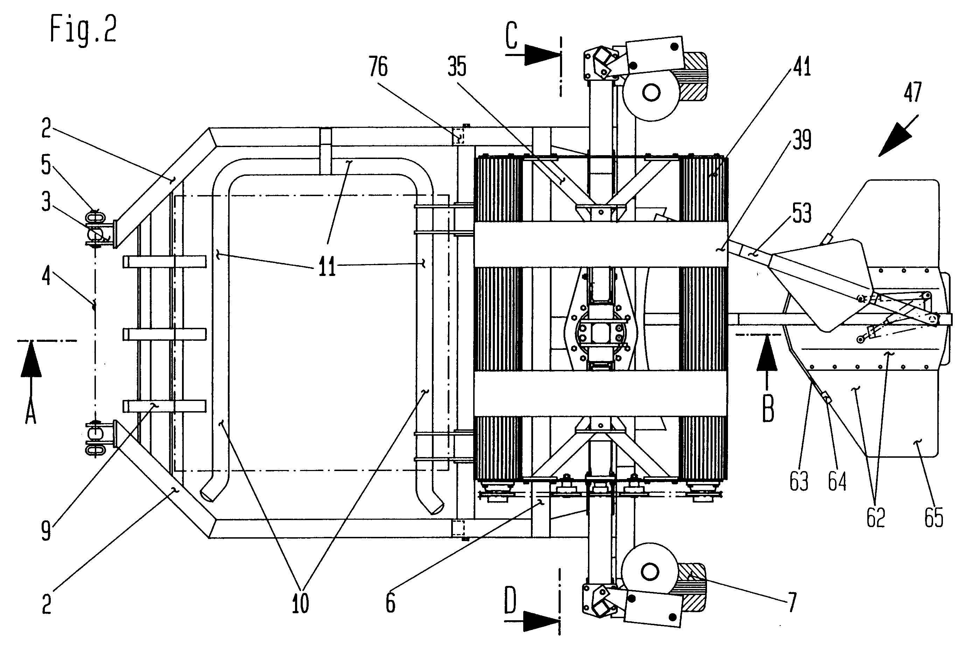

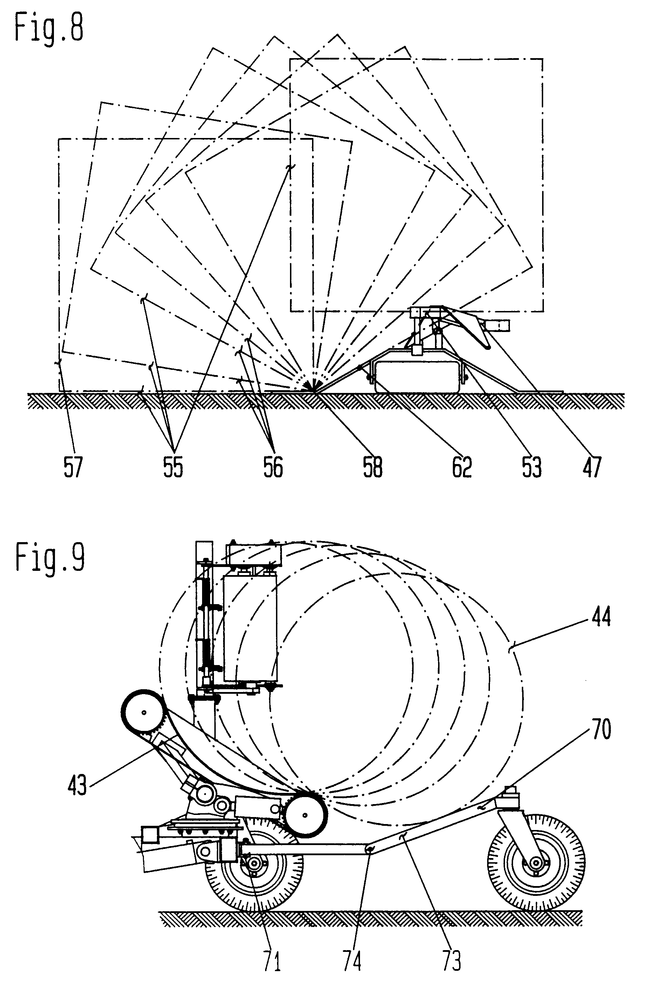

Zur Vermeidung dieser Übelstände ist hinten an das Rundballenwickelgerät 1 eine Abladekippvorrichtung 47 für Rundballen 20 angeschlossen. Gemäß Figuren 2, 7 und 8 ist diese höhenverschwenkbar um ein Gelenk 48 einer Deichsel 49 an dem Rundballenwickelgerät 1 angeschlossen und mit einem mittels eines Hydrobewegers 52 verschwenkbaren Leitstückes 53 ausgerüstet. In der Figur 2 ist das Leitstück 53 nach rechts verschwenkt dargestellt, wodurch der Rundballen 20 bei seinem Abwärtsfallen auf die schräge Auftrefffläche 51 gelangt und nach links nach und nach zum Kippen auf seine Stirnseite 55 veranlaßt wird. Entsprechende Positionen 56 sind in Figur 8 strichpunktiert dargestellt, wobei er in der Position 57 mit seiner Stirnseite 55 auf dem Boden steht. Dies kann durch gleichzeitiges Verschwenken des Leitstückes 53 nach links unterstützt werden. Zum Schutz der Stirnseitenkanten 58 der Rundballen 20 kann eine mitgeschleppte Schutzkufe 62 so schwenkund aushebbar an der Abladekippvorrichtung 47 angeordnet werden, daß durch eine nicht dargestellte Aushebevorrichtung für die Abladekippvorrichtung 47 die Schutzkufe 62 ebenfalls mit ausgehoben wird. Dies schützt zum Wenden auf dem Feld, für Straßenfahrten oder dergleichen diese Anbauteile vor Beschädigung. Die Schutzkufe 62 besteht aus einem vorn angeordneten Haltestab 63, einem Oberteil 66 sowie einem an ihm befestigten, auf dem Boden aufliegenden Schleifstück 67. Die Schutzkufe 62 wird mittels des Haltestabes 63 durch eine Lasche 64 gehalten.

Dabei ist vorteilhaft, wenn ein unterer Bereich 65 der Schutzkufe 62 aus einem elastischen Material, wie Gewebe oder einem verstärkten Gummioder Kunststofflappen besteht.

Die Rundballen 20 können wunschgemäß nach rechts oder links auf ihre Stirnseiten 55 abgelegt werden. Dazu ist das Leitstück 53 beidseitig symmetrisch ausgeführt und mittels des Hydrobewegers 52 die entsprechende Stellung einstellbar.

Die Abladekippvorrichtung 70 gemäß den Figur 9 und 10 kann ebenfalls an das Rundballenwickelgerät 1 durch eine Deichsel 73 über ein erstes Gelenk 71 angeschlossen werden. Sie ist mittels eines Hydrobewegers 72 seitenschwenkbar gelagert. Sie wird je nach dem, auf welcher Seite der Rundballen 20 auf seiner Stirnseite 55 abgelegt werden soll, beim Herunterfallen desselben, wie dargestellt, nach links oder nach rechts so verlagert, daß der Rundballen beim Herabfallen und Auftreffen auf die Deichsel 73 zum Kippen auf seine Stirnseite veranlaßt wird.

Durch das in der Ebene liegende Gelenk 74 paßt sich die Abladekippvorrichtung 70 den Unebenheiten des Erdbodens an. Mittels einer nicht dargestellten Hebeeinrichtung kann der hintere Teil der Deichsel 73 angehoben werden.

Beim Herunterfallen des Rundballens 20 kann zum Erreichen seiner abgeschlossenen Senkrechtstellung die zunächst schrägliegende Abladekippvorrichtung 70 den fallenden Rundballen 20 durch Rückverschwenkung mittels Fremdkraft entsprechend durch Drücke weiter verschwenken.

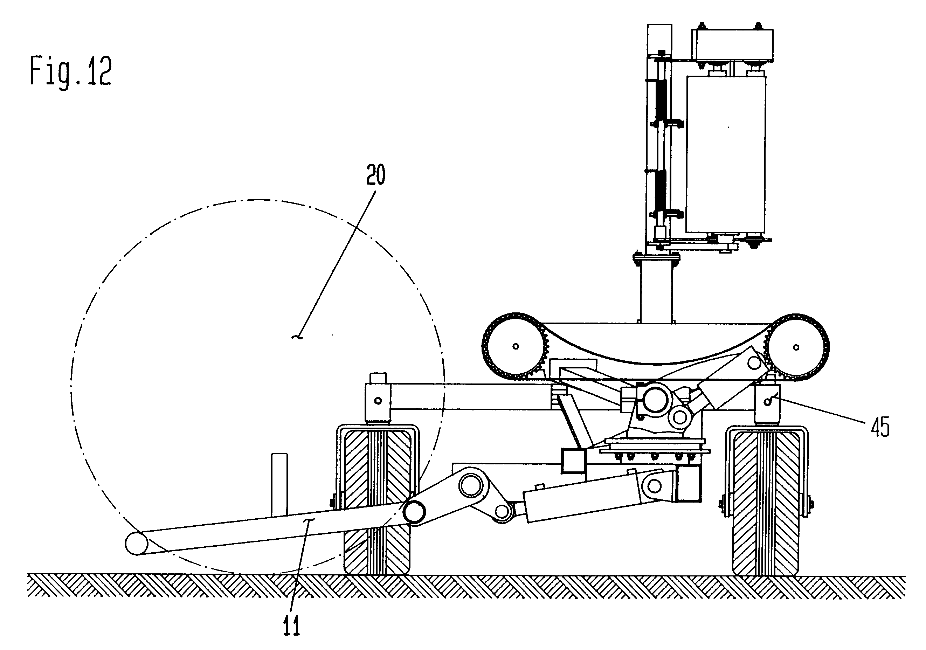

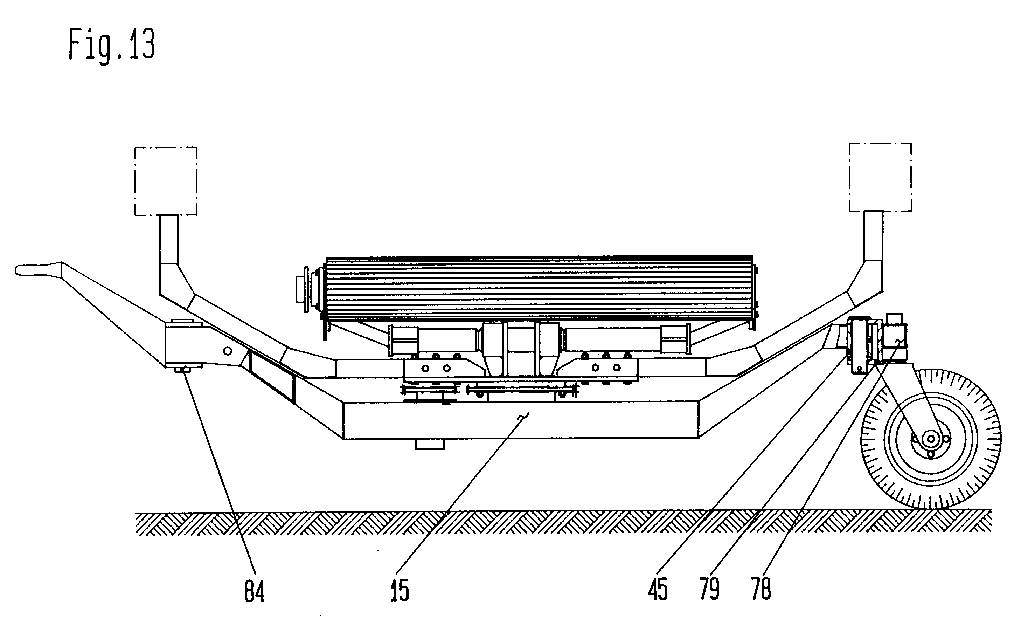

Zur Verwendung des Rundballenwickelgerätes 1 mit einem durch einen Schlepper gezogenes Aufnahmegerät zum Umwickeln der Rundballen 20 sowie Abgabe zur Seite ist es erforderlich, einige Umund Anbauten durchzuführen. So muß der Anschlußrahmen 2 vom Fahrzeugrahmen 6 getrennt werden. Hierzu wird auf die Figuren 11 bis 13 verwiesen. Es sind die Außenträger des Anschlußrahmens 2 gemäß den Figuren 2 und 11 mit dem Fahrzeugrahmen 6 an den beiden Anschlußstellen 76 durch geeignete, bekannte, schnell entfernbare Verschlüsse verbunden, so daß die Wegnahme gemäß den Figuren 9 bis 13 ohne besondere Mühewaltung erfolgen kann.

In ähnlicher Weise werden die beiden Schwenkräder 8 entfernt, indem sie aus den Außenbüchsen 45 der Schwenkachsen 8 des Fahrzeugrahmens 6 herausgenommen werden. Danach werden Sie mittels entsprechender Halterungen 77 an eine Zusatzachse 78 angeschlossen. Dabei wird die Schwenkbarkeit der Schwenkräder 8 durch entsprechende Mittel, wie Stecker 80 oder dergleichen, ausgeschaltet.

Die Zusatzachse 78 wird mit einem Anschlußteil 79 an die Fahrzeugachse 15 angeschlossen und über einen Lenker 83 festgesetzt.

Mit der gegenüberliegenden Außenbüchse 45 der Fahrzeugachse 15 wird eine Zusatzdeichsel 81 durch Aufstülpen und Abstecken mittels eines Bolzens 84 angeschlossen. Sie weist eine Öse 82 zum Anschluß an eine Anhängerkupplung eines Schleppers auf.

Der Ballenladebügel 11 wird zur Aufnahme von Rundballen 20 bis zum Boden abgelassen, wonach er den Rundballen 20 so unterfährt, daß er ihn durch Hochklappen dem in einer Schrägposition 33 befindlichen Wickeltisch 31 zuführt und dann, wie zur Figur 5 beschrieben, in die Wickelposition 42 gelangt.

Nach abgeschlossener Umwicklung erfolgt die Abgabe des Rundballens 20 entsprechend den Figuren 7 und 9, wobei die in den Figuren 11 bis 13 nicht dargestellten Abladekippvorrichtungen 47 bzw. 70 ebenfalls angebaut sind.

Zum stationären Einsatz kann das Rundballenwickelgerät 1 bzw. 1a sowohl in der Ausstattung gemäß den Figuren 1 und 2 als auch gemäß den Figuren 11 bis 13 verwendet werden, je nach dem, wie es am günstigsten für die einzelnen Betriebsverhältnisse ist. Wird z.B. der Rundballen 20 von einem Frontlader direkt aufgelegt, so brauchen der Ballenladebügel 11 und das Kippen des Wickeltisches 31 nicht in Funktion zu treten. Sollen ohne solches Ladegerät die Rundballen 20 gewickelt werden, indem sie z.B. rollend oder dergleichen zugeführt werden, so erfolgt dies zweckmäßigerweise in der Ausstattung des Rundballenwickelgerätes 1a, also nach den Figuren 11 bis 13.

Eine Halterung 77 der Zusatzachse 78 liegt in Fahrtrichtung betrachtet mit einem Abstand von 25% des Achsabstandes der Zusatzachse nahe dem linken Schwenkrad 7 und somit nahe an der Mitte des Wickeltisches 31. Das rechtsliegende Schwenkrad 7 liegt im inneren Bereich des abgelassenen Ballenladebügels 11. Die Öse 82 der Zusatzdeichsel 81 liegt etwa auf der Höhe des linken Schwenkrades 7. Somit liegt der Schwerpunkt des Ballenwickelgerätes 1a auf der linken Seite der Unterstützungsfläche, gebildet durch die Schwenkräder 7 und die Zusatzdeichsel 81. Hierdurch liegt bei einer Aufnahme eines Rundballens 20 durch den Ballenladebügel 11 vom Erdboden, der Gesamtschwerpunkt von Ballenwickelgerät 1a und Rundballen 20 ebenfalls innerhalb der Unterstützungsfläche. Ein Kippen des Rundballenwickelgerätes 1a bei der Aufnahme eines Rundballens 20 kann nicht eintreten. Zusatzgewichte, wie sie bei bekannten Geräten dieser Art üblich sind, erübrigen sich beim Erfindungsgegenstand.

Der automatische Einsatz aller beschriebenen Arbeitsabläufe erfolgt über eine bekannte, frei programmierbare Steuerung, die mit der der Presse 21 zusammenwirkt oder jeweils durch den einlaufenden Rundballen über Fühler oder Lichtschranken den Arbeitsablauf in Gang setzt. Dabei werden auch die unterschiedlichen Ausstattungen berücksichtigt.

Zum stationären Einsatz des Rundballenwickelgerätes 1 oder 1a beim Anschluß an einen Schlepper als Kraftquelle und installierter Schaltung sind keine weiteren Ergänzungen erforderlich. Zum Betrieb ohne Zugfahrzeug mit der erforderlichen Fremdkraftanlage und Schaltung sind diese Baugruppen entweder als elektro-hydraulische oder verbrennungsmotorisch-hydraulische Anlagen dem Erfindungsgegenstand zuzuordnen.

Es kann nun als Wunschausführung je nach der Bedarfslage frei entschieden werden, ob ein Rundballenwickelgerät 1 mit oder ohne selbsttätige Schaltung bzw. nicht oder zusätzlich, auch in Nachlieferung, mit den Zusätzen zur Ausstattung zum Rundballenwickelgerät 1a bzw. umgekehrt angeschafft werden soll. Ebenso verhält es sich mit dem stationären Gerät, das je nach den vorgesehenen Betriebseinsätzen universell oder in spezieller Ausrüstung nur für diese Verwendung auszulegen ist.

## Patentansprüche

1. Vorrichtung zum Umwickeln eines Rundballens (20) aus Heu, Halbheu oder Stroh mit einer Kunststoffolie, mit einem Rahmen (6) und mit einem am Rahmen (6) angebrachten Wickeltisch (31) zur Aufnahme eines zu umwickelnden Rundballens (20), wobei der Wickeltisch (31) Mittel zur Bewegung des Rundballens (20) um eine horizontale Rotationsachse aufweist und wobei der Wickeltisch (31) zum Abladen des umwickelten Rundballens (20) aus der Wickelposition (42) in eine Schrägposition (43) verschwenkbar ist, mit einem Ballenladebügel (11), der um eine zur Rotationsachse parallele Schwenkachse (12) aus einer ersten abgesenkten Position (14) zur Aufnahme des zu umwickelnden Rundballens (20) in eine zweite angehobene Position, in der sich der Rundballen (20) auf dem Wickeltisch (31) in Wickelposition befindet, verschwenkbar ist, und mit Mitteln zur Führung der Kunststoffolie um den auf dem Wickeltisch (31) befindlichen Rundballen (20) herum, welche eine Wickelmaterialhaltevorrichtung (17) umfaßt, die um eine die Rotationsachse des auf dem Wickeltisch (31) rotierend angetriebenen Rundballens (20) kreuzende Achse rotierend antreibbar ist,
dadurch gekennzeichnet,
daß die Wickelmaterialhaltevorrichung (17) mit einer Lagerung am Rahmen (6) um die die Rotationsachse des Wickeltisches (31) kreuzende Achse unterhalb des Wickeltisches (31) drehend antreibbar festgelegt ist, daß der Wickeltisch (31) aus der Wickelposition (42) zusätzlich zu der Schrägposition (43) zum Abladen des umwickelten Rundballens (20) in eine dazu entgegengerichtete Schrägposition (33) zum Ballenladebügel (11) hin verschwenkbar ist, daß zur Überführung des zu umwickelnden Rundballens (20) in die Wickelposition (42) der Ballenladebügel (11) von seiner abgesenkten ersten Position (14) und der Wickeltisch (31) aus seiner zum Ballenladebügel (11) hin geneigten Schrägposition (33) gemeinsam bis zur Wickelposition (42) des Wickeltisches (31) verschwenkbar sind und daß der Wickeltisch (31) in der Wickelposition (42) festsetzbar ist.

2. Vorrichtung nach Anspruch 1,
dadurch gekennzeichnet,
daß der Rahmen (6) eine in ihrem Mittelbereich (40) abgesenkte und nach außen zu den Rädern (7) hin hochgezogene Fahrzeugachse (15) aufweist, daß der Wickeltisch (31) und die Wickelmaterialhaltevorrichtung (17) auf dem abgesenkten Mittelbereich (40) der Fahrzeugachse (17) angebracht sind.

3. Vorrichtung nach Anspruch 2,
dadurch gekennzeichnet,
daß die Wickelmaterialhaltevorrichtung (17) über eine flach ausgeführte Lagerung (22,23) auf dem Mittelbereich (40) der Fahrzeugachse (15) angeordnet ist und daß die die Folienrollen (19) haltenden und rotierend antreibbaren Teile der Wickelmaterialhaltevorrichtung (17) an den Verlauf der Fahrzeugachse (15) angepaßt sind.

4. Vorrichtung nach einem der Ansprüche 2 oder 3,
dadurch gekennzeichnet,
daß zur Lagerung der Wickelmaterialhaltevorrichtung (17) auf der Mitte des Mittelbereiches (40) der Fahrzeugachse (15) ein axial kurzer Lagerring (18) fest angeordnet ist, dessen oberer Bereich den Innenring (23) eines Drehverbindungswälzlagers (22) aufnimmt, der anderseitig durch einen Lagerbock (29) axial gehalten ist und an dessen Außenring (24) oberseitig die Wickelmaterialhaltevorrichtung (17) und unterseitig ein Kettenrad (25) angeschlossen ist.

5. Vorrichtung nach einem der Ansprüche 1 bis 4,
dadurch gekennzeichnet,
daß ein Lagerbock (29) zur Lagerung des Wickeltisches (31) vorgesehen ist, in dem eine den Wickeltisch tragende Welle (30) horizontal und unmittelbar über der Wickelmaterialhaltevorrichtung (17) gelagert ist und daß ein Klemmstück (32), an dem ein Hydrobeweger (34) angreift, auf der Welle (30) drehfest angeordnet ist.

6. Vorrichtung nach einem der Ansprüche 1 bis 5, welche an eine Rundballenpresse (21) anhängbar ist und mit Mitteln zur direkten Übernahme eines aus der Ausstoßöffnung der Rundballenpresse (21) ausgestoßenen und zu umwickelnden Rundballens (20) versehen ist und eine Leitvorrichtung (9) zur Überleitung des ausgestoßenen Rundballens (20) auf den Ballenladebügel (11) aufweist,
dadurch gekennzeichnet,
daß ein Anschlußrahmen (2) an dem Fahrzeugrahmen (15) angebracht ist, der um eine horizontale Achse (4) schwenkbar an die Rundballenpresse (21) angeschlossen ist, daß die Räder des Fahrzeugrahmens (6) als um eine vertikal verlaufende Schwenkachse (8) schwenkbare Schwenkräder (7) ausgebildet sind und daß der Anschlußrahmen die Leitvorrichtung (9) zur Überleitung des aus der Rundballenpresse (21) ausgestoßenen Rundballens (20) an den abgesenkten Ballenladebügel (11) aufweist.

7. Vorrichtung nach Anspruch 6,
dadurch gekennzeichnet,
daß die Leitvorrichtung als Rollgitter (9) ausgebildet ist.

8. Vorrichtung nach einem der Ansprüche 6 oder 7,
dadurch gekennzeichnet,
daß der Anschlußrahmen (2) über Schnellverschlüsse (76) mit dem Fahrzeugrahmen (6) verbunden ist.

9. Vorrichtung nach einem der Ansprüche 1 bis 5 oder 8, welche einen seitlich des Wickeltisches (31) bezüglich der Fahrtrichtung des Fahrzeugrahmens (6) angeordneten Ballenladebügel (11) zur Aufnahme von am Boden liegender, gepreßter Rundballen (20) zu deren Umwicklung mit Kunststoffolie aufweist,
dadurch gekennzeichnet,
daß die Räder lösbar mit der Fahrzeugachse (15) verbunden sind, daß die Lagerung (8) eines der Räder (7) des Fahrzeugrahmens (6) zum Anschluß einer quer zur Fahrzeugachse (15) orientierten Zusatzachse (78) dient, daß die Lagerung (8) des anderen der Räder (7) zum Anschluß einer Zusatzdeichsel (79) dient und daß die Räder (7) fest mit der Zusatzachse (78) verbindbar sind.

10. Vorrichtung nach einem der Ansprüche 1 bis 9,
dadurch gekennzeichnet,
daß eine programmierbare Schaltung, insbesondere mit eigener Kraftquelle, wie einem Elektro- oder Verbrennungsmotor, vorgesehen ist, über die eine Steuerung der Bewegungsabläufe für den Wickeltisch (31), den Ballenladebügel (11) und den Antrieb der Wickelmaterialhaltevorrichtung (17) erfolgt.

11. Vorrichtung nach einem der Ansprüche 1 bis 10,
dadurch gekennzeichnet,
daß der Wickeltisch (31) beabstandete Rollen (41) aufweist, um die mindestens zwei Bänder (39) gelegt sind, deren oberer Gurt (46) so durchhängt, daß er sich unter Spannung an den Rundballen (20) anlegt.

12. Vorrichtung nach Anspruch 9,
dadurch gekennzeichnet,
daß eine Halterung (77) der Zusatzachse (78) etwa in einem Abstand von 25 % des Achsabstandes der Zusatzachse (78) angeordnet ist, wobei das weiter liegende Schwenkrad (7), in Fahrtrichtung betrachtet, im inneren Bereich des Abstandes der Arme (10) des Ballenladebügels (11) im auf den Boden abgelassenen Zustand liegt und die Öse (82) der Zusatzdeichsel (81) etwa in Flucht zum nah an der Halterung (77) liegenden Rad (7) liegt.

13. Vorrichtung nach einem der Ansprüche 1 bis 12,
dadurch gekennzeichnet,
daß mittig oder seitlich hinter dem Fahrzeugrahmen (6) eine Abladekippvorrichtung (47) höhenschwenkbar angehangen ist, die ein seitenschwenkbares, mit einer solch schräg liegenden Auftreffläche für den aus dem Rundballenwickelgerät (1,1a) fallenden Rundballen (20) versehendes Leitstück (53) aufweist, daß der Rundballen (20) beim Fall von seiner waagerechten Wickellage zu einer senkrechten Lage umgelenkt wird, wobei das Leitstück (53) den fallenden Rundballen (20) nachschwenkend durch Fremdkraft zur Auflage auf seine Stirnseite (55) abschließend kippt.

14. Vorrichtung nach einem der Anspruch 1 bis 13,
dadurch gekennzeichnet,
daß mittig oder seitlich hinter dem Fahrzeugrahmen (6) eine Abladekippvorrichtung (70) seitenschwenkbar oder höhenanpaßbar angehangen ist, die vor dem Fall des Rundballens (20) aus dem Rundballenwickelgerät (1) so seitlich verschwenkbar ist, daß letzterer so auf sie auftrifft, daß er zur Senkrechtstellung auf seine Stirnseite (55) gekippt wird und die Abladekippvorrichtung (70) dem fallenden Rundballen (20) folgend ihn zur abgeschlossenen Senkrechtstellung drückt.

15. Vorrichtung nach einem der Ansprüche 13 oder 14,
dadurch gekennzeichnet,
daß an der Abladekippvorrichtung (47,70) auf dem Erdreich aufliegende Schutzkufen (59,62) angeordnet sind, auf deren Schleifstücke (67) die Stirnseitenkanten (58) der Rundballen (20) beim Auftreffen auf den Erdboden gelangen.

## Claims

1. An apparatus for wrapping a plastic foil around a round bale (20) made from hay, semi-hay or straw, with a frame (6) and with a wrapping table (31) attached to the frame (6) for receiving a round bale (20) to be wrapped around, with the wrapping table (31) having means for moving the round bale (20) about a horizontal rotational axis and with the wrapping table (31) being swivellable from the wrapping position (42) into an inclined position (43) for unloading the wrapped round bale (20), with a bale loading bracket (11) which can be pivoted about a swivelling axis (12), which is parallel to the rotational axis, from a first lowered position (14) with respect to the receiving means of the round bale (20) to be wrapped into a second lifted position in which the round bale (20) is situated on the wrapping table (31) in the wrapping position, and with means for guiding the plastic foil around the round bale (20) situated on the wrapping table (31), which means comprise a holding apparatus (17) for the wrapping material which is rotatably drivable about an axle which crosses the rotational axis of the round bale (20) which is rotatably driven on the wrapping table (31),
characterized in that
the holding apparatus (17) for the wrapping material is provided with a bearing on the frame (6) about which the axle crossing the rotational axis of the wrapping table (31) is defined rotatably drivable below the wrapping table (31), that the wrapping table (31) is swivellable from the wrapping position (42), in addition to the inclined position (43) for unloading the wrapped round bales (20), into an inclined position (33) towards the bale loading bracket (11) which is opposite thereto, that for transferring the round bale (20), which is to be wrapped up, into the wrapping position (42) the bale loading bracket (11) is swivellable from its lowered first position (14) and the wrapping table (31) is swivellable from its inclined position jointly to the wrapping position (42) of the wrapping table (31) and that the wrapping table (31) can be locked in the wrapping position (42).

2. An apparatus as claimed in claim 1,
characterized in that
the frame (6) is provided with a vehicle axle (15) which is lowered in its central zone (40) and is drawn outward upwardly towards the wheels (7) and that the wrapping table (31) and the holding apparatus (17) for the wrapping material are attached at the lowered central zone (40) of the vehicle axle (17).

3. An apparatus as claimed in claim 2,
characterized in that
the holding apparatus (17) for the wrapping material is arranged on the central zone (40) of the vehicle axle (15) through a flatly arranged bearing (22, 23) and that the parts of the holding apparatus (17) for the wrapping material which hold the foil rolls (19) and rotatably drive them are adapted to the course of the vehicle axle (15).

4. An apparatus as claimed in one of the claims 2 or 3,
characterized in that
for the bearing of the holding apparatus (17) for the wrapping material an axially short bearing ring (18) is rigidly arranged on the centre of the central zone (40) of the vehicle axle (15), with the upper zone of the bearing ring receiving the inner ring (23) of a revolving joint roller bearing (22) which on the other side is axially held by a pillow block (29) and to whose outer ring (24) there is attached on the upper side the holding apparatus (17) for the wrapping material and on the lower side a chain wheel (25).

5. An apparatus as claimed in one of the claims 1 to 4,
characterized in that
a pillow block (29) is provided for bearing the wrapping table (31) in which a shaft (30) carrying the wrapping table is held horizontally and directly above the holding apparatus (17) for the wrapping material and that a clamp element (32), on which a hydromover (34) acts, is arranged on the shaft in a rotationally rigid manner.

6. An apparatus as claimed in one of the claims 1 to 5, which is connectable to a round bale press (21) and is provided with means for the direct reception of a round bale (20) to be wrapped which is ejected from the discharge opening of a round bale press (21) and is provided with a guiding apparatus (9) for transferring the ejected round bale (20) to the bale loading bracket (11),
characterized in that
a connecting frame (2) is attached to the vehicle frame (15) which is attached to the round bale press (21) swivellable about a horizontal axle (4), that the wheels of the vehicle frame (6) are arranged as swivelling wheels (7) which are swivellable about a vertically extending swivelling axle (8) and that the connecting frame comprises the guiding apparatus (9) for transferring the round bale (20) ejected from the round bale press (21) to the lowered bale loading bracket (11).

7. An apparatus as claimed in claim 6,
characterized in that
the guiding apparatus is arranged as a rolling grate (9).

8. An apparatus as claimed in one of the claims 6 or 7,
characterized in that
the connecting frame (2) is connected via snap closures (76) with the vehicle frame (6).

9. An apparatus as claimed in one of the claims 1 to 5 or 8, which comprises a bale loading bracket (11) which is arranged laterally of the wrapping table (31) with respect to the driving direction of the vehicle frame (6) and is used for receiving pressed round bales (20) lying on the floor for the purpose of their being wrapped around with plastic foil,
characterized in that
the wheels are detachably connected with the vehicle axle (15), that the bearing (8) of one of the wheels (7) of the vehicle frame (6) is used for connecting an additional axle (78) which is orientated transversally to the vehicle axle (15), that the bearing (8) of the other one of the wheels (7) is used for connecting an additional drawgear (79) and that the wheels (7) are rigidly connectable with the additional axle (78).

10. An apparatus as claimed in one of the claims 1 to 9,
characterized in that
a programmable circuit is provided, in particular with an own power source such as an electric motor or combustion engine, which is used for controlling the movement sequences for the wrapping table (31), the bale loading bracket (11) and the drive of the holding apparatus (17) for the wrapping material.

11. An apparatus as claimed in one of the claims 1 to 10,
characterized in that
the wrapping table (31) is provided with distanced rollers (41), with two belts (39) being placed around it and with the upper belt (46) thereof sagging in such a way that it sits close to the round bale (20) under tension.

12. An apparatus as claimed in claim 9,
characterized in that
a fixing device (77) of the additional axle (78) is arranged approx. at a distance of 25 % of the axial distance of the additional axle (78), with the swivelling wheel which is further away, as seen in the driving direction, being in a condition resting on the floor in the inner zone of the distance of the arms (10) of the bale loading bracket (11) and the lug (82) of the additional drawgear (81) lying approx. flush to the wheel (7) lying close to the fixing device (77).

13. An apparatus as claimed in one of the claims 1 to 12,
characterized in that
in the middle or at the side behind the vehicle frame (6) there is attached in a height-swivellable manner an unloading tipping apparatus (47) which is provided with a laterally swivellable guiding element (53) which is provided with such an inclined impact surface for the round bale (20) falling out of the round bale wrapping device (1, 1a) that the round bale (20) is deflected during its fall from its horizontal wrapping position into a vertical position, with the guiding element (53) finally tipping the falling round bale (20) after-swivellably by external force towards the bearing on its face side (55).

14. An apparatus as claimed in one of the claims 1 to 13,
characterized in that
in the middle or at the side behind the vehicle frame (6) there is attached in a height-adjustable and laterally swivellable manner an unloading tipping apparatus (70) which prior to the fall of the round bale (20) from the round bale wrapping apparatus (1) is laterally swivellable in such a way that the latter impinges thereon in such a way that it is tipped onto its face side (55) for the vertical position and the unloading tipping apparatus (70), following the falling round bale (20), presses it into the final vertical position.

15. An apparatus as claimed in one of the claims 13 or 14,
characterized in that
protective skids (59, 62) resting on the soil are arranged on the unloading tipping apparatus (47, 70), with the face side edges (58) of the round bales (20) reaching their shoe elements (67) on hitting the soil.

## Revendications

1. Dispositif pour l'enveloppement d'une balle cylindrique (20) de foin, de semi-foin ou de paille au moyen d'un film en plastique, pourvu d'un châssis (6) et d'une table d'enveloppement (31) fixée sur le châssis (6) et destinée à recevoir une balle cylindrique (20) à envelopper, la table d'enveloppement (31) présentant des moyens pour déplacer la balle cylindrique (20) autour d'un axe de révolution horizontal et pouvant pivoter dans une position inclinée (43) à partir de la position d'enveloppement (42) pour le déchargement de la balle cylindrique (20) enveloppée, pourvu d'un étrier de chargement (11) des balles orientable autour d'un axe de pivotement (12) parallèle à l'axe de révolution pour passer d'une première position basse (14) pour la réception de la balle cylindrique (20) à envelopper dans une seconde position haute, dans laquelle la balle cylindrique (20) se trouve en position d'enveloppement sur la table d'enveloppement (31), et pourvu de moyens de guidage du film en plastique tout autour de la balle cylindrique (20) se trouvant sur la table d'enveloppement (31), lesquels comprennent un dispositif de maintien du matériau d'enveloppement (17) pouvant être entrainé en rotation autour d'un axe concourant avec l'axe de révolution de la balle cylindrique (20) entrainée en rotation sur la table d'enveloppement (31),
caractérisé en ce que
le dispositif de maintien du matériau d'enveloppement (17) est placé dans un logement sur le châssis (6) de manière à pouvoir être entrainé en rotation autour de l'axe concourant avec l'axe de révolution de la table d'enveloppement (31) en-dessous de celle-ci, en ce que la table d'enveloppement (31) peut pivoter en direction de l'étrier de chargement (11) des balles dans une position inclinée (33) complémentaire et inverse de la position (43) de déchargement de la balle cylindrique (20) enveloppée, en ce que, pour le transport en position d'enveloppement de la balle cylindrique (20) à envelopper, l'étrier de chargement (11) des balles peut pivoter à partir de sa première position basse (14) et la table d'enveloppement (31) à partir de sa position inclinée (33) en direction de l'étrier de chargement (11), pour atteindre simultanément la position d'enveloppement (42) de la table d'enveloppement (31) et en ce que la table d'enveloppement (31) peut être fixée dans sa position d'enveloppement (42).

2. Dispositif selon la revendication 1
caractérisé en ce
que le châssis (6) présente un essieu (15) abaissé dans sa partie centrale (40) et relevé vers l'extérieur en direction des roues (7) et en ce que la table d'enveloppement (31) et le dispositif de maintien du matériau d'enveloppement (17) sont situés sur la partie centrale (40) abaissée de l'essieu (15).

3. Dispositif selon la revendication 2
caractérisé en ce
que le dispositif de maintien du matériau d'enveloppement (17) est disposé sur la partie centrale (40) de l'essieu (15) au moyen d'un dispositif à paliers de forme plate (22, 23) et en ce que les parties du dispositif de maintien du matériau d'enveloppement (17) pouvant être entrainées en rotation et maintenant les rouleaux de film (19) sont adaptées à la structure de l'essieu (15).

4. Dispositif selon l'une des revendications 2 ou 3
caractérisé en ce
qu'on a placé un anneau de palier (18) axialement court, de manière fixe et au milieu de la partie centrale (40) de l'essieu (15), pour loger le dispositif de maintien du matériau d'enveloppement (17), la partie supérieure de cet anneau (18) recevant la bague intérieure (23) d'un palier à roulement à joint tournant (22), lequel est maintenu axialement et de l'autre côté par un support (29) et à la bague extérieure (24) duquel on a raccordé en haut le dispositif de maintien du matériau d'enveloppement (17) et en bas une roue à chaînes (25).

5. Dispositif selon l'une des revendications 1 à 4
caractérisé en ce
qu'on a prévu un support (29) pour loger la table d'enveloppement (31) dans lequel un arbre (30) portant celle-ci est fixé sur paliers horizontalement et directement au-dessus du dispositif de maintien du matériau d'enveloppement (17) et en ce qu'on a fixé sur l'arbre (30) et de manière résistante à la torsion un élément de serrage (32) dans lequel s'engage un élément moteur hydraulique (34).

6. Dispositif selon l'une des revendications 1 à 5,
pouvant être attelé à une ramasseuse-presse à grosses balles cylindriques (21), pourvu de moyens de reprise directe d'une balle cylindrique (20) à envelopper et éjectée par l'orifice d'évacuation de la ramasseuse-presse à grosses balles cylindriques (21) et présentant un dispositif de guidage (9) pour le transfert de la balle cylindrique (20) éjectée sur l'étrier de chargement (11),
caractérisé en ce
qu'on a placé un châssis de raccordement (2) sur le châssis (6), lequel est relié à la ramasseuse-presse (21) de manière pivotante autour d'un axe horizontal (4), en ce que les roues du châssis (6) sont conçues comme des roues (7) orientables autour d'un axe de pivotement (8) vertical et en ce que le châssis de raccordement (2) présente le dispositif de guidage (9) pour le transfert de la balle cylindrique (20) éjectée de la ramasseuse-presse (21) vers l'étrier de chargement (11) de balles, lequel se trouve en position basse.

7. Dispositif selon la revendication 6,
caractérisé en ce
que le dispositif de guidage est conçu comme une grille à rouleaux (9).

8. Dispositif selon l'une des revendications 6 ou 7
caractérisé en ce
que le châssis de raccordement (2) est relié au châssis (6) au moyen de fermetures rapides (76).

9. Dispositif selon l'une des revendications 1 à 5 ou 8,
présentant un étrier de chargement (11) des balles situé latéralement à la table d'enveloppement (31) par rapport au sens de déplacement du châssis (6) et destiné à la reprise des balles cylindriques (20) pressées se trouvant sur le sol pour que celles-ci soient enveloppées dans un film plastique,
caractérisé en ce
que les roues sont fixées de manière amovible à l'essieu (15), en que le logement (8) d'une des roues (7) du châssis (6) sert au raccordement d'un essieu supplémentaire (78) orienté de manière tranversale à l'essieu (15), en ce que le logement (8) de l'autre roue (7) sert au raccordement d'une barre de traction supplémentaire (79) et en ce que les roues (7) peuvent être raccordées fixement à l'essieu supplémentaire (78).

10. Dispositif selon l'une des revendications 1 à 9,
caractérisé en ce
qu'on a prévu un couplage programmable, notamment avec une source d'énergie propre telle qu'un moteur électrique ou thermique, permettant de commander les différents mouvements de la table d'enveloppement (31), de l'étrier de chargement (11) des balles et l'entrainement du dispositif de maintien du matériau d'enveloppement (17).

11. Dispositif selon l'une des revendications 1 à 10,
caractérisé en ce
que la table d'enveloppement (31) présente des rouleaux (41) disposés à un certain écart les uns des autres et autour desquels on a disposé au moins deux bandes (39) dont la sangle supérieure (46) est lâche de manière à serrer la balle cylindrique, sous l'effet d'une tension.

12. Dispositif selon la revendication 9,
caractérisé en ce
qu'une fixation (77) pour l'essieu supplémentaire (78) est placée à une distance égale à environ 25% de l'entraxe de l'essieu supplémentaire (78), la roue orientable (7) la plus éloignée, par rapport au sens de la marche, étant située à l'intérieur de l'écartement des bras (10) de l'étrier de chargement (11) des balles lorsqu'elle est en contact avec le sol et l'oeil (82) de la barre de traction (81) supplémentaire étant placé à peu prés dans l'alignement de la roue (7) se trouvant près de la fixation (77).

13. Dispositif selon l'une des revendications 1 à 12,
caractérisé en ce
qu'on a attaché de manière centrale ou latérale derrière le châssis (6) un dispositif basculant de déchargement (47) orientable verticalement et présentant un élément de guidage (53) pourvu d'une surface inclinée de réception pour les balles cylindriques (20) tombant de l'appareil d'enveloppement (1, 1a) pour balles cylindriques, et en ce que la balle cylindrique (20) est déviée de sa position horizontale d'enveloppement dans une position verticale lors de sa chute, l'élément de guidage (53) faisant ensuite basculer par pivotement et par le biais d'une force extérieure la balle cylindrique (20) en cours de chute, de manière à ce que celle-ci prenne appui sur son front (55).

14. Dispositif selon l'une des revendications 1 à 13,
caractérisé en ce
qu'on a attaché de manière centrale ou latérale derrière le châssis (6) un dispositif basculant de déchargement (70) orientable latéralement ou ajustable verticalement, lequel peut pivoter latéralement avant que la balle cylindrique tombe de l'appareil d'enveloppement (1) pour balles cylindriques de manière à ce que le contact entre la balle cylindrique (20) et le dispositif (70) soit tel que celle-ci bascule sur son front (55) en position verticale et en ce que le dispositif basculant de déchargement (70) appuie sur la balle (20) après que celle-ci est tombée pour parachever le positionnement vertical.

15. Dispositif selon l'une des revendications 13 ou 14,
caractérisé en ce
qu'on a pourvu le dispositif basculant de déchargement (47, 70) de patins de protection (59, 62) reposant sur le sol et sur les frotteurs (67) desquels les bords frontaux (58) des balles cylindriques (20) arrivent lorsque celles-ci touchent le sol.
